# EUROPÄISCHE PATENTSCHRIFT

(11) **EP 2 812 970 B1**
(45) Veröffentlichungstag und Bekanntmachung des Hinweises auf die Patenterteilung: **14.06.2017**
(21) Anmeldenummer: 13700560.9
(22) Anmeldetag: 15.01.2013
(51) Int. Cl.: H02J 1/10, H02M 3/158, H02J 9/06, H02M 1/00

(54) **MODULAR REDUNDANTE DC/DC STROMVERSORGUNGSANORDNUNG MIT PARALLELSCHALTBAREN AUSGÄNGEN**
MODULAR REDUNDANT DC/DC POWER SUPPLY WITH OUTPUTS THAT CAN BE CONNECTED IN PARALLEL
ALIMENTATION EN COURANT C.C./C.C. MODULAIRE REDONDANTE DOTÉE DE SORTIES COMMUTABLES EN PARALLÈLE

(30) Priorität: 06.02.2012 EP 12153970
(43) Veröffentlichungstag der Anmeldung: 17.12.2014
(73) Patentinhaber: Siemens Aktiengesellschaft, 80333 München (DE)
(72) Erfinder: AUGESKY, Christian, A-1100 Wien (AT); SCHWEIGERT, Harald, A-1120 Wien (AT)
(86) Internationale Anmeldenummer: PCT/EP2013/050621
(87) Internationale Veröffentlichungsnummer: WO 2013/117388

(56) Entgegenhaltungen:
- WO-A1-2010/149205
- WO-A2-2005/109154
- US-A1- 2004 003 306
- US-A1- 2005 094 330
- US-A1- 2009 271 642

## Beschreibung

Die Erfindung betrifft eine Stromversorgung zur redundanten Versorgung einer Last, mit einer ersten Versorgungseinheit und einer zweiten Versorgungseinheit, wobei die beiden Versorgungseinheiten zusammengeschaltet sind, wobei die Stromversorgung als ein Gerät mit einem ersten und einem zweiten DC-DC-Wandler ausgebildet ist, wobei jedem DC-DC-Wandler zumindest zwei Ausgangsschaltregler nachgeschaltet sind, wobei dem ersten DC-DC-Wandler ein erster Ausgangsschaltregler nachgeschaltet ist und wobei dem zweiten DC-DC-Wandler ein zweiter Ausgangsschaltregler nachgeschaltet ist und wobei die Ausgänge des ersten und des zweiten Ausgangsschaltreglers zusammengeschaltet sind.

Elektrische Anlagen unterliegen oft besonderen Sicherheitsanforderungen oder der Notwendigkeit einer hohen Verfügbarkeit. Kritische Teile solcher Anlagen werden redundant ausgeführt, um einen Anlagenausfall zu verhindern, wenn ein Fehler auftritt. Das betrifft auch Stromversorgungen.

Nach dem Stand der Technik besteht eine redundante Stromversorgungen aus zwei separaten Versorgungseinheiten, deren Ausgänge über eine Redundanzschaltung zusammengeschaltet sind. Dabei ist jede Versorgungseinheit für die anzuschließende Last ausgelegt.

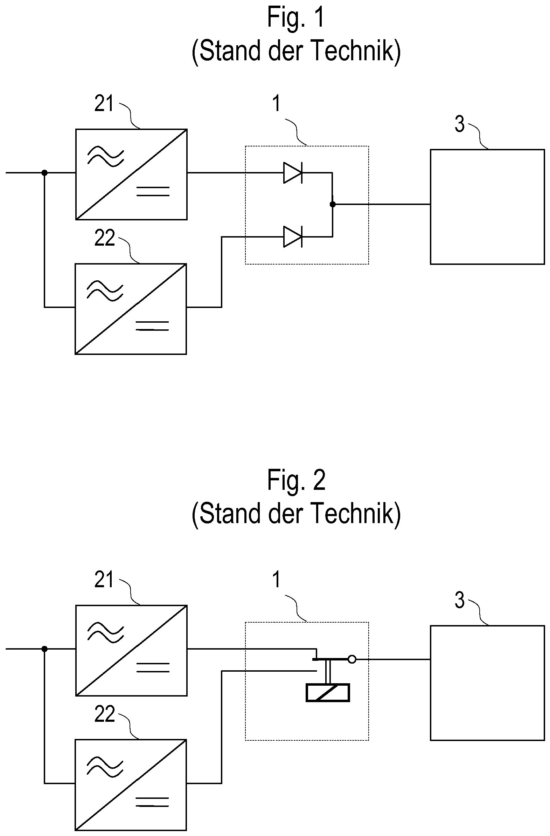

Die Redundanzschaltung besteht im einfachsten Fall aus Dioden, die zur Entkopplung an den Ausgängen der Versorgungseinheiten angeordnet sind (Fig. 1). Jede Versorgungseinheit regelt die Ausgangsspannung separat, wobei es zwangsläufig zu Unsymmetrien zwischen den von den Versorgungseinheiten abgegebenen Leistungen kommt. Auch im fehlerfreien Betrieb liefert deshalb eine Versorgungseinheit erheblich mehr Leistung. Resultat ist ein ungleichmäßiger Verschleiß der beiden Versorgungseinheiten, wodurch anzunehmen ist, dass eine der beiden Einheiten nur eine geringere Lebensdauer aufweisen wird.

Bei höheren Leistungen verursachen Dioden zu hohe Verluste. Zur Entkopplung dienen deshalb auch Relais oder Halbleiterschalter (Fig. 2). Auch hier ist der Verschleiß der beiden Versorgungseinheiten ungleichmäßig, weil im Normalbetrieb nur die über den Schalter mit einer Last verbundene Versorgungseinheit belastet wird. Zudem kommt es im Fehlerfall während eines Umschaltvorgangs zu einer kurzzeitigen Versorgungsunterbrechung.

Aus der US 2004/003306 A1 ist eine Stromversorgung mit redundantem Aufbau bekannt. Dabei ist eine erste Versorgungseinheit, bestehend aus einem Filter, einer PFC-Schaltung und einem DC-DC-Wandler an eine erste Eingangsspannung geschaltet. Eine gleichartig aufgebaute zweite Versorgungseinheit ist an eine zweite Eingangsspannung geschaltet. Beiden DC-DC-Wandler sind zwei Ausgangsschaltregler nachgeschaltet, wobei deren Ausgänge zusammengeschaltet sind.

Auch die US 2005/094330 A1 beschreibt eine mehrstufig aufgebaute, redundante Stromversorgung. Mehrere DC-DC-Wandler sind über Filter an eine Eingangsspannung geschaltet und versorgen mehrere Ausgangsschaltregler, deren Ausgänge miteinander verbunden sind.

Die US 2009/271642 A1 beschreibt ein Versorgungssystem mit mehreren Subsystemen. Jedes Subsystem umfasst zwei Stromversorgungen, deren Ausgänge zur gemeinsamen Versorgung einer Last parallel geschaltet sind.

Der Erfindung liegt die Aufgabe zugrunde, für eine Stromversorgung der eingangs genannten Art eine Verbesserung gegenüber dem Stand der Technik anzugeben.

Erfindungsgemäß wird diese Aufgabe gelöst durch eine Stromversorgung gemäß Patentanspruch 1. Weiterbildungen sind in abhängigen Ansprüchen angegeben. Ein Verfahren zum Betrieb einer Stromversorgung gemäß Anspruch 1 sowie Weiterbildungen des Verfahrens sind in den Ansprüchen 13 und folgende angegeben. Demnach ist die Stromversorgung als ein Gerät mit einem ersten und einem zweiten DC-DC-Wandler ausgebildet, wobei dem ersten DC-DC-Wandler ein erster Ausgangsschaltregler nachgeschaltet ist und wobei dem zweiten DC-DC-Wandler ein zweiter Ausgangsschaltregler nachgeschaltet ist und wobei die Ausgänge der Ausgangsschaltregler zusammengeschaltet sind. Zudem sieht die erfindungsgemäße Lösung vor, dass jedem DC-DC-Wandler zumindest zwei Ausgangsschaltregler nachgeschaltet sind. Damit steigt die Flexibilität bei der Versorgung mehrerer Lasten. Zudem entfällt die Notwendigkeit, für größere Lasten leistungsstärkere und damit teurere Bauteile vorzusehen. Höhere Ausgangsleistungen sind auf einfache Weise durch die Zusammenschaltung mehrerer Ausgangsschaltregler eines Pfads erreichbar.

Des Weiteren sind die Ausgänge des ersten und des zweiten Ausgangsschaltreglers zur redundanten Versorgung einer Last parallel zusammengeschaltet und dem ersten DC-DC-Wandler ist ein weiterer erster Ausgangsschaltregler nachgeschaltet und dem zweiten DC-DC-Wandler ist ein weiterer zweiter Ausgangsschaltregler nachgeschaltet. Die weiteren Ausgangsschaltregler können zur Versorgung weiterer Lasten dienen oder die Ausfallsicherheit der Stromversorgung erhöhen.

Erfindungsgemäß ist zur Erhöhung der Ausfallsicherheit vorgesehen, dass der Ausgang des ersten DC-DC-Wandlers und der Eingang des ersten Ausgangsschaltregler sowie der Ausgang des weiteren ersten Ausgangsschaltreglers an eine erste Umschalteinheit des Gerätes geführt sind und dass mittels der ersten Umschalteinheit der Eingang des ersten Ausgangsschaltreglers zwischen dem Ausgang des ersten DC-DC-Wandlers und dem Ausgang des weiteren ersten Ausgangsschaltreglers umschaltbar ist, dass des Weiteren der Ausgang des zweiten DC-DC-Wandlers und der Eingang des zweiten Ausgangsschaltregler sowie der Ausgang des weiteren zweiten Ausgangsschaltreglers an eine zweite Umschalteinheit des Gerätes geführt sind und dass mittels der zweiten Umschalteinheit der Eingang des zweiten Ausgangsschaltreglers zwischen dem Ausgang des zweiten DC-DC-Wandlers und dem Ausgang des weiteren zweiten Ausgangsschaltreglers umschaltbar ist.

Dabei werden zur Erhöhung der Sicherheit der Ausgangsschaltregler und der weitere Ausgangsschaltregler eines Pfades in Serie geschaltet. Der jeweils nachgeschaltete Ausgangsschaltregler übernimmt hierbei die Funktion eines Sicherheitsschalters, der im Schadensfall den fehlerhaften Versorgungspfad vom Ausgang freischaltet. Diese Maßnahme ist vor allem dann von Vorteil, wenn ein Defekt eines vorgeschalteten Ausgangsschaltreglers einen Kurzschluss am Ausgang bewirken würde.

Die erfindungsgemäße redundante Stromversorgung ist als ein Gerät mit zwei parallelen Pfaden ausgebildet, wobei jeder Pfad zwei Wandlerstufen umfasst. Dadurch entfällt die Notwendigkeit einer Entkopplung der Ausgänge mittels einer Redundanzschaltung. Zudem ist eine günstige Bauelementebelastung bei gleichzeitiger Minimierung der Baugröße und der auftretenden Verluste gegeben. Auch der Verkabelungsaufwand sinkt gegenüber bekannten Lösungen.

Jeder Pfad ist auf die gesamte Leistung der zu versorgenden Last ausgelegt. Dabei besteht die Möglichkeit, die beiden Pfade intern wechselweise abzutrennen, sodass die Versorgung einer Last alternierend durch einen der beiden Pfade erfolgt. Insbesondere bei Betriebszuständen mit geringer Leistungsentnahme ist es sinnvoll, wenn nur ein Pfad die Versorgung übernimmt, um Verluste möglichst gering zu halten.

Alternativ dazu werden beide Pfade mit halber Last belastet, wodurch wie beim alternierenden Betrieb ein gleichmäßiger Verschleiß aller Geräteteile erfolgt.

Zweckmäßig ist es, wenn eine übergeordnete Steuerung zur vorgebbaren Leistungsverteilung der Ausgangsschaltregler vorgesehen ist. Die am verbundenen Ausgang abgegebene Gesamtleistung wird dann entsprechend einer Vorgabe mittels Steuerung auf die beiden Ausgangsschaltregler aufgeteilt.

In einer günstigen Variante ist die übergeordnete Steuerung zur Leistungssymmetrierung der Ausgangsschaltregler eingerichtet. Jeder Pfad verfügt dabei über eine eigene Stromregelung mit einer gemeinsamen Spannungsregelung mittels übergeordneter Steuerung.

Alternativ dazu ist der Steuerung zumindest ein Betriebsparameter zugeführt, wobei die Steuerung zur Beeinflussung des Betriebs der DC-DC-Wandler sowie der Ausgangsschaltregler in Abhängigkeit dieses Betriebsparameters eingerichtet ist. Der zumindest eine Betriebsparameter ist beispielsweise eine Temperatur oder eine betriebsbedingte Spannungsbelastung eines kritischen Bauteils (Transistor etc.). In Abhängigkeit dieses Betriebsparameters oder mehrerer Parameter wird mittels der übergeordneten Steuerung bewusst eine asymmetrische Leistungsverteilung der beiden Pfade eingestellt. Dies ist zum Beispiel dann von Vorteil, wenn es zu unterschiedlichen Kühlverhältnissen kommt. Wird etwa direkt neben einer Geräteseite eine direkt anschließende Baugruppe platziert, beeinträchtigt das die Kühlung an dieser Seite. Durch eine Aufteilung der Dauerleistung entsprechend der Temperatur kann die Abnutzung und damit die Lebensdauer der beiden Wandler bzw. Schaltregler balanciert werden.

Um Schaltverluste gering zu halten, sind die DC-DC-Wandler vorzugsweise als Resonanzwandler ausgebildet.

In einer weiteren Variante ist vorgesehen, dass jedem DC-DC-Wandler eine eigene Absicherungseinheit vorgeschaltet ist, welche den jeweiligen DC-DC-Wandler bei einer vorgegebenen Überlast vom restlichen Geräteschaltkreis abtrennt. Jede Wandlereinheiten weist also eine geräteinterne Absicherung auf. Bei einer Anordnung mit einem gemeinsamen Netzgleichrichter und einem gemeinsamen Funkentstörfilter ist zum Beispiel nach dem Filter in jeder Wandlerversorgungsleitung eine Sicherung angeordnet. Im Fall eines Bauteildefekts in einem Wandler kann der jeweils andere Wandler weiterarbeiten. Als Absicherungseinheit dient beispielsweise eine Schmelzsicherung, ein mechanischer Schutzschalter oder ein schnell schaltender Halbleiterschalter, welcher ein annähernd rückwirkungsfreies Wegschalten des defekten Zweiges ermöglicht.

In einer Ausprägung der Erfindung ist jedem DC-DC-Wandler ein eigener Zwischenkreis vorgeschaltet, welcher über eine Gleichrichtereinheit an ein Versorgungsnetz anschließbar ist. Die Redundanz erstreckt sich hierbei auch über Gleichrichterkomponenten und über Zwischenkreiskomponenten.

Dabei ist es von Vorteil, wenn ein Anschluss zumindest eines Zwischenkreises mittels eines Schalters zwischen einem Versorgungsnetz und einer Versorgungseinheit umschaltbar ist. Bei einem Ausfall des Versorgungsnetzes wird der Zwischenkreis an die Versorgungseinheit angeschaltet. Diese Versorgungseinheit ist beispielsweise eine Batterie zur Aufrechterhaltung eines Pufferbetriebs.

In einer alternativen Ausprägung ist vorgesehen, dass beide DC-DC-Wandler an einen gemeinsamen Zwischenkreis angeschlossen sind, welcher über eine Gleichrichtereinheit an ein Versorgungsnetz anschließbar ist. Auch hier ist eine Umschaltbarkeit auf eine andere Versorgungseinheit für einen Pufferbetrieb von Vorteil. Die gemeinsame Nutzung der Gleichrichter- und Zwischenkreiskomponenten ist für viele Anwendungen ausrechend, weil das Ausfallrisiko dieser Komponenten geringer als jenes der Wandlerkomponenten einzustufen ist.

Zur Vermeidung von Oberwellen im Versorgungsnetz ist es vorteilhaft, wenn die jeweilige Gleichrichtereinheit über ein passives Filter an ein Versorgungsnetz anschließbar ist.

Zur Abdeckung höherer Ausgangsspannungen besteht die Möglichkeit, die Ausgänge der Ausgangsschaltregler in Serie zusammenzuschalten.

Günstigerweise ist jeder Ausgangsschaltregler als Abwärtsschaltregler ausgebildet. Eine gleichgerichtete Versorgungsnetzspannung wird dann mittels DC-DC-Wandler auf eine Kleinspannung umgewandelt. Diese Kleinspannung bildet das Niveau für die Bildung einer niedrigeren Ausgangsspannung mittels Abwärtsschaltregler. Die Kleinspannung ermöglicht ein gefahrloses Zuschalten externer Versorgungseinheiten für einen Pufferbetrieb, oder weiterer Abwärtsschaltregler für die Versorgung zusätzlicher Lasten. Konfigurationsänderungen der Stromversorgung sind dann ohne weitere Sicherheitsvorkehrungen durch ein Bedienpersonal durchführbar. Zudem ist damit ein geringes Ausgangsniveau für die Abwärtsschaltregler gegeben, wodurch ein sehr guter Wirkungsgrad der Abwärtsschaltregler erreicht wird. Es können nämlich Bauelemente, insbesondere Halbleiter, zur Anwendung kommen, welche bei geringen Spannungen aus herstellungstechnologischen Gründen geringe Verluste aufweisen.

Einen Aufwärtsschaltregler vorzusehen ist sinnvoll, wenn zusätzlich eine höhere Ausgangsspannung benötigt wird. Dabei bildet der Aufwärtsschaltregler vorteilhafterweise die vorletzte Stufe einer mehrstufigen Stromversorgung.

Ein erfindungsgemäßes Verfahren für eine oben beschriebene Stromversorgung mit Umschalteinheiten sieht vor, dass eine mittels Umschalteinheit durchgeführte Verbindung des Eingangs eines Ausgangsschaltreglers mit dem Ausgangs eines weiteren Ausgangsschaltreglers einer Steuerung signalisiert wird und dass infolgedessen der nachgeschaltete Ausgangsschaltregler als Entkoppeldiode angesteuert wird.

Dabei ist es von Vorteil, wenn jedem als Entkoppeldiode angesteuerten Ausgangsschaltregler eine Strombegrenzung vorgegeben wird, die zumindest um eine Einstelltoleranz und eine zu erwartende Alterungsdrift höher angesetzt ist als eine Strombegrenzung des vorgeschalteten Ausgangsschaltreglers, welcher am Ausgang die Spannung regelt bzw. den Strom auf einen eingestellten Wert begrenzt. Die Strombegrenzung des nachgeschalteten Ausgangsschaltreglers greift dann im Normalbetrieb nicht ein.

In gleicher Weise ist es sinnvoll, wenn bei jedem als Entkoppeldiode angesteuerten Ausgangsschaltregler eine Spannungsregelung auf einen Wert eingestellt wird, der zumindest um eine Einstelltoleranz und eine zu erwartende Alterungsdrift höher angesetzt ist als eine maximal eingestellte Ausgangsspannung des vorgeschalteten Ausgangsschaltreglers.

Zudem ist es vorteilhaft, wenn während einer Entkoppelungsansteuerung in jedem der zwei Pfade die Stromflussrichtung überwacht wird und dass bei einem Stromfluss vom Ausgang zum Eingang des jeweiligen Ausgangsschaltregler der Stromfluss unterbrochen wird.

In einem verbesserten Verfahren ist vorgesehen, dass einer Spannungsregelung des jeweils als Entkoppeldiode angesteuerten Ausgangsschaltreglers eine maximal zulässige Ausgangsspannung vorgegeben wird. Die maximal zulässige Ausgangsspannung entspricht dabei jeder Spannung, die für eine zu versorgende Last zulässig ist. Somit ist ein wirksamer Überspannungsschutz gegeben.

Dabei ist es günstig, wenn im Entkoppelungsmodus ein Warnsignal generiert wird, sobald eine Stromflussrichtung von einem Ausgang zu einem Eingang eines jeweiligen Ausgangsschaltregler detektiert wird und/oder ein eingestellter maximaler Strom erreicht wird und/oder in einem Überspannungsschutzbetrieb eine maximal zulässige Ausgangsspannung erreicht wird. Ein Bedienpersonal wird auf diese Weise rasch auf einen Fehler aufmerksam gemacht.

Die Erfindung wird nachfolgend in beispielhafter Weise unter Bezugnahme auf die beigefügten Figuren erläutert. Es zeigen in schematischer Darstellung:
- Fig. 1: Redundante Stromversorgung nach dem Stand der Technik mit zwei Dioden
- Fig. 2: Redundante Stromversorgung nach dem Stand der Technik mit Umschalter
- Fig. 3: Stromversorgung mit zwei parallelen Pfaden
- Fig. 4: Stromversorgung mit zwei parallelen Pfaden und Umschaltmöglichkeit auf eine zusätzliche Versorgungseinheit
- Fig. 5: Stromversorgung mit einem Zwischenkreis
- Fig. 6: Stromversorgung mit in Serie geschalteten Ausgängen
- Fig. 7: Stromversorgung mit umschaltbaren Ausgängen gemäß der Erfindung
- Fig. 8: Abwärtsschaltregler

Die Figuren 1 und 2 zeigen redundante Stromversorgungen nach dem Stand der Technik. Dabei ist eine Redundanzschaltung 1 vorgesehen, mittels derer eine Last 3 an zwei separate Versorgungseinheiten 21, 22 geschaltet ist. Jede diese Versorgungseinheiten 21, 22 stellt ein eigenes Stromversorgungsgerät dar.

Dem gegenüber ist erfindungsgemäß vorgesehen, eine Stromversorgung zur redundanten Versorgung einer Last als ein einziges Gerät in einem Gehäuse auszubilden, wobei nicht sicherheitsrelevante Komponenten nur einmalig angeordnet sind.

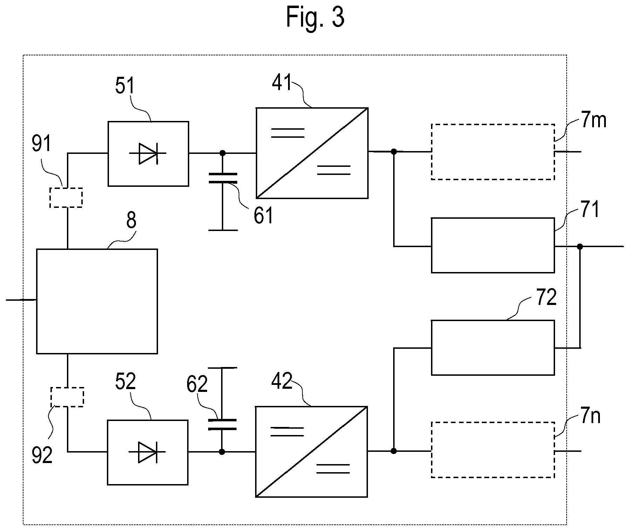

Beispielsweise umfasst die Konfiguration gemäß Fig. 3 nur ein passives Filter 8, über das zwei Pfade an ein Versorgungsnetz angeschlossen sind. Jeder Pfad umfasst eine Gleichrichtereinheit 51 bzw. 52, einen Zwischenkreis 61 bzw. 62 mit Kondensator, einen DC-DC-Wandler 41 bzw. 42 und zumindest einen Ausgangsschaltregler 71 bzw. 72. An jeden DC-DC-Wandler 41 bzw. 42 sind auch mehrere Ausgangsschaltregler 71, 7m bzw. 72, 7n angeschaltet. Zwischen Filter 8 und den DC-DC-Wandlern 41 bzw. 42 ist optional jeweils eine Absicherungseinheit 91 bzw. 92 angeordnet. Die Absicherungseinheit 91 bzw. 92 ist als Sicherung oder elektronisches Strombegrenzungselement ausgebildet. Im Fehlerfall wird der Strom durch den defekten Pfad begrenzt oder der Pfad wird gänzlich vom restlichen Geräteschaltkreis getrennt. Die jeweilige Absicherungseinheit 91 bzw. 92 ist entweder vor der im selben Strompfad befindlichen Gleichrichtereinheit 51 bzw. 52 angeordnet, wie gestrichelt in Fig. 3 eingezeichnet, oder danach.

Jeder Pfad verfügt über eine eigene Regelung. Für eine gemeinsame Spannungsregelung ist eine nicht dargestellte übergeordnete Steuerung vorgesehen. Diese dient zum Beispiel der Symmetrierung, das heißt der gleichmäßigen Leistungsverteilung auf beide Pfade. Eine gemeinsame Steuerung ist auch zum alternierenden Betrieb der beiden Pfade einsetzbar, insbesondere bei geringer Leistungsaufnahme einer angeschlossenen Last. Eine weitere Möglichkeit sieht vor, der übergeordneten Steuerung solche Betriebsparameter zuzuführen, die eine Aussage über die Belastung kritischer Schaltungselemente zulassen. Beispielsweise wird in Abhängigkeit der Temperatur kritischer Bauelemente mittels Steuerung die Leistung auf die beiden Pfade so aufgeteilt, dass sich eine gleichmäßige thermische Beanspruchung ergibt.

In einer erweiterten Variante erfolgt mittels übergeordneter Steuerung eine Synchronisierung der Taktfrequenzen der einzelnen Wandler 41, 42 und Ausgangsschaltregler 71, 7m, 72, 7n. Vorteilhafterweise geschieht die Synchronisierung in der Art, dass die Taktfrequenzen gleich hoch sind oder sich in einem vorgebbaren Verhältnis zueinander befinden. Dadurch wird ein akustisches Geräusch im Hörbereich vermieden, welches sich durch ein Aufsummieren der Taktfrequenzen und durch Differenzfrequenzen ergeben kann.

Weiters ist mittels übergeordneter Steuerung im Synchronisierungsbetrieb eine vorgebbare Phasenverschiebung der Taktfrequenzen der Wandler 41, 42 erzwingbar, wodurch die Strombelastung von Kondensatoren reduziert wird, aus welchen die beiden Pfade ihre Eingangsenergie entnehmen und/oder ihre Energie abgeben.

Das vorliegende Stromversorgungsgerät ist besonders für Ausgangsleistungen von in Summe 500 W vorteilhaft. Ab dieser Leistung ist es sinnvoll, anstelle eines teueren leistungsstarken Bauelements mehrere kleinere Bauelemente parallel zu schalten. Ein einziger Geräteaufbau ist dann als eine Stromversorgung mit hoher Ausgangsleistung oder als eine redundante Stromversorgung nutzbar. In beiden Fällen sind die Ausgänge mehrere Wandler parallel geschaltet, wobei im Redundanzbetrieb mit zwei Pfaden nur die halbe Gesamtgeräteleistung genutzt wird.

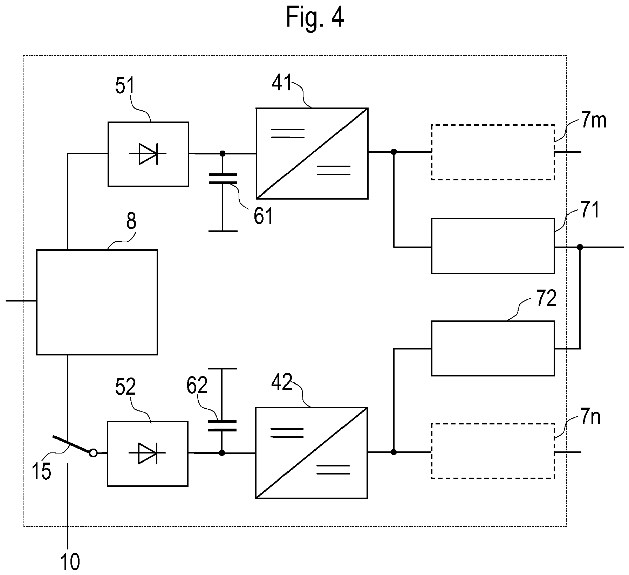

Die Gerätetopographie erlaubt auf einfache Weise eine Abkopplung eines DC-DC-Wandlers 41 bzw. 42 vor oder nach der dazugehörenden Gleichrichtereinheit 51 bzw. 52. In Fig. 4 ist der unten dargestellte Pfad vor der Gleichrichtereinheit 52 von der Netzversorgung abkoppelbar. Dies geschieht mittels eines gesteuerten Schalters 15, der bei Netzausfall auf eine andere Versorgungseinheit 10 umschaltet. Eine solche vollständige Redundanz ermöglicht die Nutzung einer zweiten Wechsel- oder Gleichspannung für einen Pufferbetrieb.

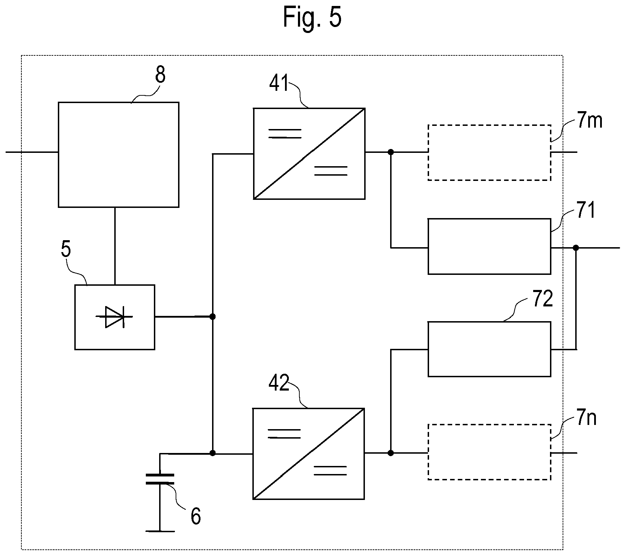

Im Falle geringer Sicherheitsanforderung sind die DC-DC-Wandler 41, 42 an einen gemeinsamen Zwischenkreis 6 angeschaltet. Dieser ist über eine Gleichrichtereinheit 5 und über ein gemeinsames Filter 8 an ein Versorgungsnetz anschließbar, wie in Fig. 5 gezeigt.

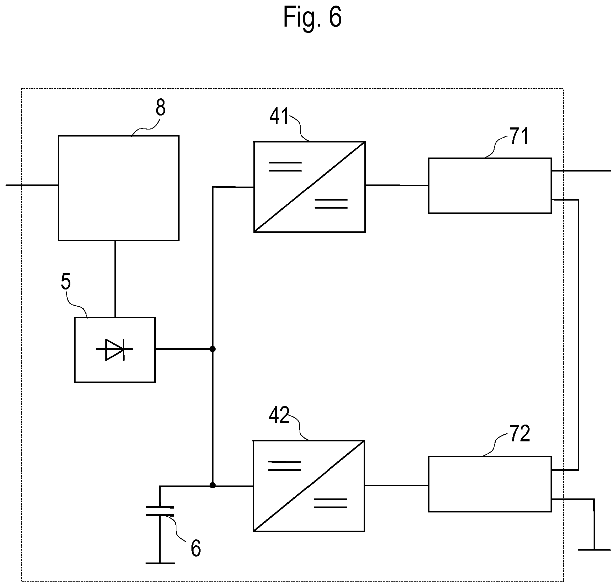

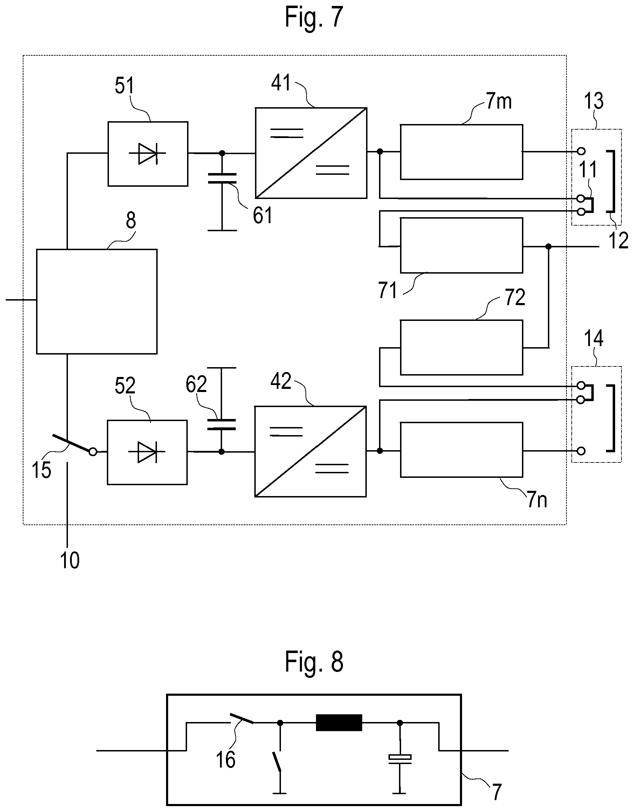

Eine zusätzliche Möglichkeit ist bei einer galvanisch getrennten Ausführung der beiden Pfade gegeben. Eine solche Anordnung ist zur Verdopplung der Ausgangsspannung nutzbar, indem die Ausgänge der Ausgangsschaltregler 71, 72 in Serie geschaltet sind (Fig. 6). Die Ausprägung nach der Erfindung mit kompletter Redundanz und Beherrschbarkeit von Kurzschlussfehlern eines Ausgangsschaltreglers 7n bzw. 7m ist in Fig. 7 dargestellt. Im oben gezeichneten Pfad sind der Ausgang des ersten DC-DC-Wandlers 41 und der Eingang des ersten Ausgangsschaltreglers 71 an eine erste Umschalteinheit 13 des Gerätes geführt. An diese erste Umschalteinheit 13 ist auch der Ausgang eines weiteren ersten Ausgangsschaltreglers 7m geführt. Die Umschalteinheit 13 besteht zum Beispiel aus einem mechanischen Schalter oder aus auswechselbaren Steckkontakten 11, 12 (Steckbrücke). Im Normalbetrieb verbindet die erste Umschalteinheit 13 den Ausgang des ersten DC-DC-Wandlers 41 mit dem Eingang des ersten Ausgangsschaltreglers 71. Der Ausgang des weiteren ersten Ausgangsschaltreglers 7m ist anderweitig nutzbar.

In einem erhöhten Sicherheitsbetrieb wird die Verbindung zwischen erstem DC-DC-Wandler 41 und erstem Ausgangsschaltwandler 71 gelöst. Stattdessen verbindet die erste Umschalteinheit 13 den Ausgang des weiteren ersten Ausgangsschalterreglers 7m mit dem Eingang des ersten Ausgangsschaltwandlers 71.

In analoger Weise sind der zweite DC-DC-Wandler 42 und der zweite Ausgangsschaltwandler 72 sowie ein weiterer zweiter Ausgangsschaltwandler 7n mittels einer zweiten Umschalteinheit 14 umschaltbar.

Die Ausgangsschaltwandler 71, 72, 7m, 7n sind als Abwärtsschaltregler 7 ausgebildet, wie in Fig. 8 dargestellt. Im erhöhten Sicherheitsbetrieb arbeitet dann der Schalter 16 des nachgeschalteten Abwärtsschaltreglers 71 bzw. 72 als aktive Entkoppeldiode. Sobald in einem Pfad ein Kurzschluss auftritt, wird dieser Pfad mittels des Schalters 16 freigeschaltet.

Vorteilhaft ist es, die mechanische Umschalteinheit 13 bzw. 14 derart zu gestalten, dass bei erhöhtem Sicherheitsbedarf ein Signal generiert wird, welches der Steuerung des jeweils nachgeschalteten Ausgangsschaltreglers 71 bzw. 72 einen Befehl für den Betriebsmodus als Entkoppelbaugruppe übermittelt. Im Betriebsmodus als Entkoppeldiode (Entkoppelmodus) hat die jeweilige Steuerung die Aufgabe, diejenigen Halbleiterschalter im direktesten Strompfad zwischen Eingang und Ausgang des Ausgangsschaltreglers 71 bzw. 72 so anzusteuern, dass zu keiner Zeit ein Stromfluss vom Ausgang des jeweiligen Ausgangsschaltreglers 71 und 72 zum Eingang erfolgen kann. Dabei ist die Steuerung eingerichtet, um die Halbleiter im Strompfad so anzusteuern, dass diese beim Durchleiten des Stromes die geringst möglichen Verluste aufweisen.

Weiters ist es zweckmäßig, die Strombegrenzung des jeweiligen Ausgangsschaltreglers 71 bzw. 72, der als Entkopplungsbaugruppen vorgesehen ist, zu deaktivieren und nur bei Erkennung einer Stromrichtungsumkehr abzuschalten. Alternativ dazu wird die Strombegrenzung auf einen Wert eingestellt, der zumindest um die Einstelltoleranz und die zu erwartende Alterungsdrift höher angesetzt ist als die Strombegrenzung des vorgeschalteten Ausgangsschaltreglers 7m bzw. 7n, welcher die Regelung der Ausgangsspannung und die Strombegrenzung durchführt. Ebenso ist es zweckmäßig, den Spannungsregler des Ausgangsschaltregler 71 bzw. 72, der als Entkoppeldiode dient, abzuschalten oder so weit nach oben zu setzen, dass dieser im Normalbetrieb nicht eingereift.

In einem Fall von erhöhtem Sicherheitsbedürfnis kann der Spannungsregler der Entkopplungsbaugruppe als Überspannungsschutzelement eingesetzt werden, indem der Spannungsregler auf einen Wert eingestellt wird, welcher der Obergrenze des Toleranzbereichs der Spannungsempfindlichkeit einer anzuschließenden Last entspricht.

Im Fehlerfall, wenn eine der beschriebenen Sicherheitsmaßnahmen greift, gibt das Gerät günstigerweise ein Warnsignal ab.

Durch die Ausführung mit doppelter Sicherheit bei Strom und Spannung können auch die Anforderungen von speziellen Sicherheitsnormen wie z.B. UL Class 2 erfüllt werden, wobei eine wesentliche Forderung die Begrenzung der am Ausgang entnehmbaren Leistung darstellt.

Die Erfindung ist nicht auf Geräte mit zwei parallel geschalteten Pfaden beschränkt. Ein erfindungsgemäßes Gerät kann auch drei oder mehr parallele Pfade aufweisen, wobei die Ausfallsicherheit zunimmt.

## Patentansprüche

1. Stromversorgung zur redundanten Versorgung einer Last (3), mit einer ersten Versorgungseinheit und einer zweiten Versorgungseinheit, wobei die beiden Versorgungseinheiten zusammengeschaltet sind, wobei die Stromversorgung als ein Gerät mit einem ersten und einem zweiten DC-DC-Wandler (41, 42) ausgebildet ist, wobei jedem DC-DC-Wandler (41, 42) zumindest zwei Ausgangsschaltregler (71, 7m, 72, 7n) nachgeschaltet sind, wobei dem ersten DC-DC-Wandler (41) ein erster Ausgangsschaltregler (71) nachgeschaltet ist und wobei dem zweiten DC-DC-Wandler (42) ein zweiter Ausgangsschaltregler (72) nachgeschaltet ist und wobei die Ausgänge des ersten und des zweiten Ausgangsschaltreglers (71, 72) zusammengeschaltet sind, und wobei dem ersten DC-DC-Wandler (41) ein weiterer erster Ausgangsschaltregler (7m) nachgeschaltet ist und wobei dem zweiten DC-DC-Wandler (42) ein weiterer zweiter Ausgangsschaltregler (7n) nachgeschaltet ist, **dadurch gekennzeichnet, dass** der Ausgang des ersten DC-DC-Wandlers (41) und der Eingang des ersten Ausgangsschaltregler (71) sowie der Ausgang des weiteren ersten Ausgangsschaltreglers (7m) an eine erste Umschalteinheit (13) des Gerätes geführt sind und dass mittels der ersten Umschalteinheit (13) der Eingang des ersten Ausgangsschaltreglers (71) zwischen dem Ausgang des ersten DC-DC-Wandlers (41) und dem Ausgang des weiteren ersten Ausgangsschaltreglers (7m) umschaltbar ist, dass des Weiteren der Ausgang des zweiten DC-DC-Wandlers (42) und der Eingang des zweiten Ausgangsschaltregler (72) sowie der Ausgang des weiteren zweiten Ausgangsschaltreglers (7n) an eine zweite Umschalteinheit (14) des Gerätes geführt sind und dass mittels der zweiten Umschalteinheit (14) der Eingang des zweiten Ausgangsschaltreglers (72) zwischen dem Ausgang des zweiten DC-DC-Wandlers (42) und dem Ausgang des weiteren zweiten Ausgangsschaltreglers (7n) umschaltbar ist.

2. Stromversorgung nach Anspruch 1, **dadurch gekennzeichnet, dass** eine übergeordnete Steuerung zur vorgebbaren Leistungsverteilung der Ausgangsschaltregler (71, 72) vorgesehen ist.

3. Stromversorgung nach Anspruch 2, **dadurch gekennzeichnet, dass** die übergeordnete Steuerung zur Leistungssymmetrierung der Ausgangsschaltregler (71, 72) eingerichtet ist.

4. Stromversorgung nach Anspruch 2, **dadurch gekennzeichnet, dass** der übergeordneten Steuerung zumindest ein Betriebsparameter zugeführt ist und dass die Steuerung zur Beeinflussung des Betriebs der DC-DC-Wandler (41, 42) sowie der Ausgangsschaltregler (71, 72) in Abhängigkeit dieses Betriebsparameters eingerichtet ist.

5. Stromversorgung nach einem der Ansprüche 1 bis 4, **dadurch gekennzeichnet, dass** jeder DC-DC-Wandler (41, 42) als Resonanzwandler ausgebildet ist.

6. Stromversorgung nach einem der Ansprüche 1 bis 5, **dadurch gekennzeichnet, dass** jedem DC-DC-Wandler (41, 42) eine eigene Absicherungseinheit vorgeschaltet ist, welche den jeweiligen DC-DC-Wandler bei einer vorgegebenen Überlast vom restlichen Geräteschaltkreis abtrennt.

7. Stromversorgung nach einem der Ansprüche 1 bis 6, **dadurch gekennzeichnet, dass** jedem DC-DC-Wandler (41, 42) ein eigener Zwischenkreis (61, 62) vorgeschaltet ist, welcher über eine Gleichrichtereinheit (51, 52) an ein Versorgungsnetz anschließbar ist.

8. Stromversorgung nach Anspruch 7, **dadurch gekennzeichnet, dass** ein Anschluss zumindest eines Zwischenkreises (62) mittels eines Schalters (15) zwischen einem Versorgungsnetz und einer Versorgungseinheit (10) umschaltbar ist.

9. Stromversorgung nach einem der Ansprüche 1 bis 6, **dadurch gekennzeichnet, dass** beide DC-DC-Wandler (41, 42) an einen gemeinsamen Zwischenkreis (6) angeschlossen sind, welcher über eine Gleichrichtereinheit (5) an ein Versorgungsnetz anschließbar ist.

10. Stromversorgung nach einem der Ansprüche 8 bis 9, **dadurch gekennzeichnet, dass** die jeweilige Gleichrichtereinheit (5, 51, 52) über ein passives Filter (8) an ein Versorgungsnetz anschließbar ist.

11. Stromversorgung nach einem der Ansprüche 1 bis 10, **dadurch gekennzeichnet, dass** die Ausgänge der Ausgangsschaltregler (71, 72) in Serie zusammengeschaltet sind.

12. Stromversorgung nach einem der Ansprüche 1 bis 11, **dadurch gekennzeichnet, dass** jeder Ausgangsschaltregler (71, 7m, 72, 7n) als Abwärtsschaltregler ausgebildet ist.

13. Verfahren zum Betreiben einer Stromversorgung nach einem der Ansprüche 1 bis 12, **dadurch gekennzeichnet, dass** eine mittels Umschalteinheit (13 bzw. 14) durchgeführte Verbindung des Eingangs eines Ausgangsschaltreglers (71 bzw. 72) mit dem Ausgangs eines weiteren Ausgangsschaltreglers (7m bzw. 7n) einer Steuerung signalisiert wird und dass infolgedessen der nachgeschaltete Ausgangsschaltregler (71 bzw. 72) als Entkoppeldiode angesteuert wird.

14. Verfahren gemäß Anspruch 13, **dadurch gekennzeichnet, dass** jedem als Entkoppeldiode angesteuerten Ausgangsschaltregler (71 bzw. 72) eine Strombegrenzung vorgegeben wird, die zumindest um eine Einstelltoleranz und eine zu erwartende Alterungsdrift höher angesetzt ist als eine Strombegrenzung des vorgeschalteten Ausgangsschaltreglers (7m bzw. 7n).

15. Verfahren nach Anspruch 13 oder 14, **dadurch gekennzeichnet, dass** bei jedem als Entkoppeldiode angesteuerten Ausgangsschaltregler (71 bzw. 72) eine Spannungsregelung auf einen Wert eingestellt wird, der zumindest um eine Einstelltoleranz und eine zu erwartende Alterungsdrift höher angesetzt ist als eine maximal eingestellte Ausgangsspannung des vorgeschalteten Ausgangsschaltreglers (7m bzw. 7n).

16. Verfahren nach einem der Ansprüche 13 bis 15, **dadurch gekennzeichnet, dass** im Entkoppelungsmodus die Stromflussrichtung überwacht wird und dass bei einem Stromfluss vom Ausgang zum Eingang des jeweiligen Ausgangsschaltregler (7m bzw. 7n) der Stromfluss unterbrochen wird.

17. Verfahren nach einem der Ansprüche 13 bis 16, **dadurch gekennzeichnet, dass** einer Spannungsregelung des jeweils als Entkoppeldiode angesteuerten Ausgangsschaltreglers (71 bzw. 72) eine maximal zulässige Ausgangsspannung vorgegeben wird.

18. Verfahren nach einem der Ansprüche 13 bis 17, **dadurch gekennzeichnet, dass** im Entkoppelungsmodus ein Warnsignal generiert wird, wenn eine Stromflussrichtung von einem Ausgang zu einem Eingang eines jeweiligen Ausgangsschaltregler (7m bzw. 7n) detektiert wird und/oder ein eingestellter maximaler Strom erreicht wird und/oder in einem Überspannungsschutzbetrieb eine maximal zulässige Ausgangsspannung erreicht wird.

## Claims

1. Power supply arrangement for redundantly supplying power to a load (3), comprising a first supply unit and a second supply unit, wherein the two supply units are interconnected, wherein the power supply arrangement is designed as a device having a first and a second DC-DC converter (41, 42), wherein at least two output switching controllers (71, 7m, 72, 7n) are connected on the load side of each DC-DC converter (41, 42), wherein a first output switching controller (71) is connected on the load side of the first DC-DC converter (41) and wherein a second output switching controller (72) is connected on the load side of the second DC-DC converter (42), and wherein the outputs of the first and second output switching controller (71, 72) are interconnected, and wherein a further first output switching controller (7m) is connected on the load side of the first DC-DC converter (41) and wherein a further second output switching controller (7n) is connected on the load side of the second DC-DC converter (42), **characterised in that** the output of the first DC-DC converter (41) and the input of the first output switching controller (71) and the output of the further first output switching controller (7m) are routed to a first switch unit (13) of the device, and that the input of the first output switching controller (71) can be switched between the output of the first DC-DC converter (41) and the output of the further first output switching controller (7m) by means of the first switch unit (13), that in addition the output of the second DC-DC converter (42) and the input of the second output switching controller (72) and the output of the further second output switching controller (7n) are routed to a second switch unit (14) of the device, and that the input of the second output switching controller (72) can be switched between the output of the second DC-DC converter (42) and the output of the further second output switching controller (7n) by means of the second switch unit (14).

2. Power supply arrangement according to claim 1, **characterised in that** a supervisory control unit is provided for the purpose of predetermining the power distribution of the output switching controllers (71, 72).

3. Power supply arrangement according to claim 2, **characterised in that** the supervisory control unit is so configured as to provide symmetry of power at the output switching controllers (71, 72).

4. Power supply arrangement according to claim 2, **characterised in that** at least one operating parameter is supplied to the supervisory control unit, and that the control unit is so configured as to influence the operation of the DC-DC converters (41, 42) and of the output switching controllers (71, 72) as a function of this operating parameter.

5. Power supply arrangement according to one of claims 1 to 4, **characterised in that** each DC-DC converter (41, 42) is designed as a resonance converter.

6. Power supply arrangement according to one of claims 1 to 5, **characterised in that** a dedicated protection unit is connected on the line side of each DC-DC converter (41, 42) and separates the respective DC-DC converter from the rest of the device circuit in the event of a predetermined overload.

7. Power supply arrangement according to one of claims 1 to 6, **characterised in that** a dedicated DC link (61, 62) is connected on the line side of each DC-DC converter (41, 42) and can be connected to a supply network via a rectifier unit (51, 52).

8. Power supply arrangement according to claim 7, **characterised in that** a connection interface of at least one DC link (62) can be switched between a supply network and a supply unit (10) by means of a switch (15).

9. Power supply arrangement according to one of claims 1 to 6, **characterised in that** both DC-DC converters (41, 42) are connected to a shared DC link (6), which can be connected to a supply network via a rectifier unit (5).

10. Power supply arrangement according to one of claims 8 to 9, **characterised in that** the respective rectifier unit (5, 51, 52) can be connected to a supply network via a passive filter (8).

11. Power supply arrangement according to one of claims 1 to 10, **characterised in that** the outputs of the output switching controllers (71, 72) are interconnected in series.

12. Power supply arrangement according to one of claims 1 to 11, **characterised in that** each output switching controller (71, 7m, 72, 7n) is designed as a step-down switching controller.

13. Method for operating a power supply arrangement according to one of claims 1 to 12, **characterised in that** a connection of the input of one output switching controller (71 or 72) to the output of a further output switching controller (7m or 7n) by a switch unit (13 or 14) is signalled to a control unit, whereupon the output switching controller (71 or 72) connected on the load side is activated as a decoupling diode.

14. Method according to claim 13, **characterised in that** a current limit is predetermined for each output switching controller (71 or 72) activated as a decoupling diode, said current limit being set higher by at least a setting tolerance and an expected age drift than a current limit of the output switching controller connected on the line side (7m or 7n).

15. Method according to claim 13 or 14, **characterised in that** a voltage regulating means for each output switching controller (71 or 72) activated as a decoupling diode is set to a value which is higher by at least a setting tolerance and an expected age drift than a maximum output voltage that has been set for the output switching controller connected on the line side (7m or 7n).

16. Method according to one of claims 13 to 15, **characterised in that** the current flow direction is monitored in the decoupling mode, and the current flow is interrupted if the current flows from the output to the input of the respective output switching controller (7m or 7n).

17. Method according to one of claims 13 to 16, **characterised in that** a maximum permitted output voltage is predetermined for a voltage regulating means of the output switching controller (71 or 72) which is activated as a decoupling diode in each case.

18. Method according to one of claims 13 to 17, **characterised in that** a warning signal is generated in the decoupling mode if a current flow direction from an output to an input of a respective output switching controller (7m or 7n) is detected and/or a set maximum current value is reached, and/or if a maximum permitted output voltage is reached in an overvoltage protection mode.

## Revendications

1. Alimentation en courant destinée à une alimentation redondante d'une charge (3), avec une première unité d'alimentation et une deuxième unité d'alimentation, dans laquelle les deux unités d'alimentation sont accouplées, dans laquelle l'alimentation en courant est réalisée sous forme d'un appareil avec des premier et deuxième convertisseurs CC-CC (41, 42), dans laquelle au moins deux régulateurs de commutation de sortie (71, 7m, 72, 7n) sont placés en aval de chaque convertisseur CC-CC (41, 42), dans laquelle un premier régulateur de commutation de sortie (71) est placé en aval du premier convertisseur CC-CC (41) et dans laquelle un deuxième régulateur de commutation de sortie (72) est placé en aval du deuxième convertisseur CC-CC (42), et dans laquelle les sorties des premier et deuxième régulateurs de commutation de sortie (71, 72) sont accouplées, et dans laquelle un autre premier régulateur de commutation de sortie (7m) est placé en aval du premier convertisseur CC-CC (41) et dans laquelle un autre deuxième régulateur de commutation de sortie (7n) est placé en aval du deuxième convertisseur CC-CC (42), **caractérisé en ce que** la sortie du premier convertisseur CC-CC (41) et l'entrée du premier régulateur de commutation de sortie (71) ainsi que la sortie de l'autre premier régulateur de commutation de sortie (7m) sont pilotées au niveau d'une première unité de commutation (13) de l'appareil, et l'entrée du premier régulateur de commutation de sortie (71) peut être commutée entre la sortie du premier convertisseur CC-CC (41) et la sortie de l'autre premier régulateur de commutation de sortie (7m) au moyen de la première unité de commutation (13), la sortie du deuxième convertisseur CC-CC (42) et l'entrée du deuxième régulateur de commutation de sortie (72) ainsi que la sortie de l'autre deuxième régulateur de commutation de sortie (7n) sont en outre pilotées au niveau d'une deuxième unité de commutation (14) de l'appareil, et l'entrée du deuxième régulateur de commutation de sortie (72) peut être commutée entre la sortie du deuxième convertisseur CC-CC (42) et la sortie de l'autre deuxième régulateur de commutation de sortie (7n) au moyen de la deuxième unité de commutation (14).

2. Alimentation en courant selon la revendication 1, **caractérisée en ce qu'**une commande prioritaire est prévue en vue d'une répartition de puissance spécifiable du régulateur de commutation de sortie (71, 72).

3. Alimentation en courant selon la revendication 2, **caractérisé en ce que** la commande prioritaire est conçue en vue d'une symétrisation de puissance du régulateur de commutation de sortie (71, 72).

4. Alimentation en courant selon la revendication 2, **caractérisée en ce qu'**au moins un paramètre de fonctionnement est fourni à la commande prioritaire et la commande est conçue pour influencer le fonctionnement du convertisseur CC-CC (41, 42) ainsi que celui du régulateur de commutation de sortie (71, 72) en fonction dudit paramètre de fonctionnement.

5. Alimentation en courant selon l'une quelconque des revendications 1 à 4, **caractérisée en ce que** chaque convertisseur CC-CC (41, 42) est réalisé sous forme de convertisseur à résonance.

6. Alimentation en courant selon l'une quelconque des revendications 1 à 5, **caractérisée en ce qu'**une unité de protection séparée est placée en amont de chaque convertisseur CC-CC (41, 42), ladite unité séparant les convertisseurs CC-CC respectifs du reste du circuit de commutation de l'appareil dans le cas d'une surcharge spécifiée.

7. Alimentation en courant selon l'une quelconque des revendications 1 à 6, **caractérisée en ce qu'**un circuit intermédiaire (61, 62) séparé est placé en amont de chaque convertisseur CC-CC (41, 42), ledit circuit pouvant être raccordé à un réseau d'alimentation par l'intermédiaire d'une unité de redressage (51, 52).

8. Alimentation en courant selon la revendication 7, **caractérisée en ce qu'**une borne d'au moins un circuit intermédiaire (62) entre un réseau d'alimentation et une unité d'alimentation (10) peut être commutée au moyen d'un commutateur (15).

9. Alimentation en courant selon l'une quelconque des revendications 1 à 6, **caractérisée en ce que** les deux convertisseurs CC-CC (41, 42) sont raccordés à un circuit intermédiaire (6) commun qui peut être raccordé à un réseau d'alimentation par l'intermédiaire d'une unité de redressage (5).

10. Alimentation en courant selon la revendication 8 ou 9, **caractérisée en ce que** l'unité de redressage (5, 51, 52) respective peut être raccordée à un réseau d'alimentation par l'intermédiaire d'un filtre passif (8).

11. Alimentation en courant selon l'une quelconque des revendications 1 à 10, **caractérisée en ce que** les sorties du régulateur de commutation de sortie (71, 72) sont accouplées en série.

12. Alimentation en courant selon l'une quelconque des revendications 1 à 11, **caractérisée en ce que** chaque régulateur de commutation de sortie (71, 7m, 72, 7n) est réalisé sous la forme d'un régulateur abaisseur de tension.

13. Procédé destiné à faire fonctionner une alimentation en courant selon l'une quelconque des revendications 1 à 12, **caractérisé en ce qu'**une liaison, réalisée au moyen d'une unité de commutation (13 ou 14), de l'entrée d'un régulateur de commutation de sortie (71 ou 72) avec la sortie d'un autre régulateur de commutation de sortie (7m ou 7n) est indiquée à une commande et, en conséquence de cela, le régulateur de commutation de sortie (71 ou 72) placé en aval est commandé en tant que diode de découplage.

14. Procédé selon la revendication 13, **caractérisé en ce qu'**une limitation de courant est spécifiée à chaque régulateur de commutation de sortie (71 ou 72) commandé en tant que diode de découplage, ladite limitation étant supérieure à une limitation d'alimentation du régulateur de commutation de sortie (7m ou 7n) placé en amont au moins pour une tolérance d'ajustement et une dérive de vieillissement probable.

15. Procédé selon la revendication 13 ou 14, **caractérisé en ce que**, pour chaque régulateur de commutation de sortie (71 ou 72) commandé en tant que diode de découplage, une régulation de tension est ajustée à une valeur est supérieure à une tension de sortie ajustée maximale du régulateur de commutation de sortie (7m ou 7n) placé en amont au moins pour une tolérance d'ajustement et une dérive de vieillissement probable.

16. Procédé selon l'une quelconque des revendications 13 à 15, **caractérisé en ce que** le sens de circulation de courant est surveillé dans le mode de découplage et la circulation de courant est interrompue pour une circulation de courant allant de la sortie vers l'entrée du régulateur de commutation de sortie (7m ou 7n) respectif.

17. Procédé selon l'une quelconque des revendications 13 à 16, **caractérisé en ce qu'**une tension de sortie autorisée maximale est spécifiée à une régulation de tension du régulateur de commutation de sortie (71 ou 72) commandé respectivement en tant que diode de découplage.

18. Procédé selon l'une quelconque des revendications 13 à 17, **caractérisé en ce qu'**un signal d'avertissement est généré dans le mode de découplage lorsqu'un sens de circulation de courant allant d'une sortie vers une entrée d'un régulateur de commutation de sortie (7m ou 7n) respectif est détecté et/ou lorsqu'un courant maximal ajusté est atteint et/ou lorsqu'une tension de sortie autorisée maximale est atteinte au cours d'un fonctionnement de protection contre une surtension.
